# EUROPÄISCHE PATENTSCHRIFT

(11) **EP 3 791 759 B1**
(45) Veröffentlichungstag und Bekanntmachung des Hinweises auf die Patenterteilung: **14.06.2023**
(21) Anmeldenummer: 20188341.0
(22) Anmeldetag: 18.12.2018
(51) Int. Cl.: A47F 10/00, B65G 1/00, A47F 5/10, B27B 31/00, B27M 1/08, B23Q 7/10

(54) **VERFAHREN ZUM MANIPULIEREN VON ABLAGEN ODER UNTERTEILUNGEN VON MOBILEN VORRATSELEMENTEN MITTELS EINER HANDLINGVORRICHTUNG**
METHOD FOR MANIPULATING SHELVES OR SUBDIVISIONS OF MOBILE DEVICE ELEMENTS USING A HANDLING DEVICE
PROCÉDÉ DE MANIPULATION DE PLATEAUX OU DE SUBDIVISIONS D'ÉLÉMENTS DE STOCKAGE MOBILES AU MOYEN D'UN DISPOSITIF DE MANUTENTION

(30) Priorität: 21.12.2017 DE 102017131003
(43) Veröffentlichungstag der Anmeldung: 17.03.2021
(62) Teilanmeldung aus: 18213278.7
(73) Patentinhaber: IMA Schelling Deutschland GmbH, 32312 Lübbecke (DE)
(72) Erfinder: Niebur, Dirk, 32609 Hüllhorst (DE)
(74) Vertreter: Schober, Mirko

(56) Entgegenhaltungen:
- EP-A1- 2 253 422
- EP-A2- 2 527 112
- WO-A1-2016/168006
- CN-U- 206 344 105
- DE-A1-102013 106 640
- US-A- 6 126 131
- US-A1- 2004 217 028

## Beschreibung

Die Erfindung betrifft ein Verfahren, gemäß dem Oberbegriff des Patentanspruchs 1, zum Manipulieren von Ablagen oder Unterteilungen von mobilen Vorratselementen mittels einer Handlingvorrichtung. Ein derartiges Verfahren geht beispielsweise aus der DE 10 2013 106 640 A1 hervor.

Bei der Holzverarbeitung müssen plattenförmige Erzeugnisse vor ihrer Bearbeitung und gegebenenfalls auch danach sortiert, abgelegt oder sonst wie gefördert oder bevorratet werden. Nicht selten kommen dabei sogenannte mobile Vorratselemente zum Einsatz, beispielsweise sogenannte Hordenwagen, auf denen einzelne Werkstücke platziert werden. Die mobilen Vorratselemente weisen dazu eine Ablage oder eine Mehrzahl Ablagen auf. In der Regel sind diese mobilen Vorratselemente entsprechend den Anforderungen unterteilt und/oder vorgerüstet.

Zumeist werden für die mobilen Vorratselemente daher standardisierte Einrichtungen verwendet, die eine Vielzahl unterschiedlicher Werkstücke aufnehmen können. Dabei kommt es durchaus vor, dass möglicherweise vorhandene Kapazitäten nicht oder nur unzureichend genutzt werden. Folglich wird die Bestückung der einzelnen mobilen Vorratselemente in der Regel nach einem vorgegebenen Teileplan vorgenommen, um "Leerstellen" in den mobilen Vorratselementen möglichst zu vermeiden. Dies hat wiederum den Nachteil, dass möglicherweise zu einer Kommission gehörende Teile auf unterschiedlichen mobilen Vorratselementen untergebracht werden müssen. Dies ist nachteilig. Folglich kommt es in der Praxis immer wieder vor, dass mobile Vorratselemente nicht optimal ausgelastet sind.

Aufgabe der vorliegenden Erfindung ist es daher, ein Verfahren zum Manipulieren von Ablagen oder Unterteilungen von mobilen Vorratselementen mittels einer Handlingvorrichtung zu schaffen, bei welchem die geschilderten Nachteile nicht auftreten.

Gelöst wird diese Aufgabe durch ein Verfahren mit den Merkmalen des Anspruchs 1. Vorteilhafte Ausführungsformen finden sich in den Unteransprüchen.

Eine Handlinganordnung für plattenförmige Erzeugnisse aus Holz oder Holzersatzstoffen kann dazu folgendes aufweisen:
Eine Handlingvorrichtung mit einer Mehrzahl zur Aufnahme von plattenförmigen Erzeugnissen ausgelegten mobilen Vorratselementen,
eine Mehrzahl plattenförmige Erzeugnisse aus Holz oder Holzersatzstoffen und
eine Maschinensteuerung. Dabei ist vorgesehen, dass jedes mobile Vorratselement wenigstens eine Ablage zur Aufnahme und/oder Ablage von plattenförmigen Erzeugnissen umfasst.

Erfindungsgemäß ist nun die Handlingvorrichtung in der Lage, Ablagen oder Unterteilungen an den mobilen Vorratselementen zu manipulieren. Wenigstens eine Ablage und/oder wenigstens eine Unterteilungseinrichtung wenigstens eines mobilen Vorratselements sind also durch die Handlingvorrichtung manipulierbar ausgebildet. Die Handlingvorrichtung ist dabei nun dazu ausgelegt, die wenigstens eine Ablage und/oder Unterteilungseinrichtung derart zu manipulieren, dass plattenförmige Erzeugnisse nach einem durch die Maschinensteuerung vorgegebenen Teileplan in dem betreffenden Vorratselement Platz finden. Das Rüsten des mobilen Vorratselements erfolgt also erfindungsgemäß bereits durch die Handlingvorrichtung, die jedes mobile Vorratselement dazu individuell nach einem vorgegebenen Teileplan einrichtet bzw. rüstet und dabei Ablagen und/oder Unterteilungen herausnimmt, hereinnimmt, verschiebt usw. Auf diese Weise ist es möglich, bereits vor der Produktion der nach einem Teileplan vorgegebenen Teile entsprechende Ablagemöglichkeiten so zu schaffen, dass der durch die mobilen Vorratselemente zur Verfügung gestellte Raum individuell und bestmöglich genutzt werden kann. So kann auch erreicht werden, dass zusammengehörige Kommissionen von Plattenteilen auf möglichst wenige mobile Vorratselemente verteilt werden.

Nach einer vorteilhaften Ausführungsform kann vorgesehen sein, dass die manipulierbare Ablage und/oder Unterteilungseinrichtung entfernbar und/oder versetzbar und/oder verschwenkbar und/oder verschiebbar ist/sind. Auf diese Weise lassen sich mit Hilfe der Handlingvorrichtung, die bevorzugt einen Handlingroboter umfasst, die mobilen Vorratselemente sehr individuell auf den vorgegebenen Teileplan und die in jedem mobilen Vorratselement laut Teileplan unterzubringenden Teile anpassen und rüsten.

Das oder die mobilen Vorratselemente können dabei als Hordenwagen ausgebildet sein, so dass sie sich auch leicht - auch miteinander gekoppelt - zu Transportzwecken durch den Arbeitsraum bewegen lassen.

Nach einer weiteren Ausführungsform kann vorgesehen sein, dass wenigstens ein Vorratselement eine Erkennungsvorrichtung aufweist, welche die ordnungsgemäße oder nicht ordnungsgemäße Aufnahme eines oder einer Mehrzahl plattenförmiger Erzeugnisse durch das Vorratselement erkennt. Die Erkennungsvorrichtung kann zum Beispiel eine Lichtschranke oder auch eine mechanische Einrichtung sein, die beispielsweise das Verrutschen eines im Vorratselement platzierten Plattenteils anzeigt und der Handlingvorrichtung signalisiert, dass sich ein bestimmtes Teil nicht am vorgesehenen Ort befindet.

Beim Rüsten des Vorratselements durch die Handlingvorrichtung kann es vorkommen, dass einzelne Ablageelemente oder Unterteilungen gar nicht benötigt werden. In einem solchen Fall kann es sich anbieten, dass diese nicht benötigten Elemente trotzdem am Vorratselement verbleiben. Dazu kann insbesondere vorgesehen sein, dass wenigstens ein Vorratselement eine Verstaueinrichtung zur Aufnahme nicht benötigter Ablagen und/oder Unterteilungseinrichtungen umfasst. Diese Vorratselemente sind dann in der Lage, entsprechend nicht benötigte Teile zu befestigen oder an ihnen einzuhängen, sodass das Vorratselement auch in Ausgestaltung als Hordenwagen in dieser Konfiguration transportiert werden kann. Dies umfasst auch die Möglichkeit, vorhandene Ablagen und/oder Unterteilungseinrichtungen aus einer Gebrauchslage in eine Verstaulage zu verschwenken. Dazu sind die Ablagen und/oder Unterteilungseinrichtungen dann schwenkbar an dem Vorratselement angeordnet.

Nach einer besonderen Ausführungsform umfasst die Handlinganordnung weiter eine Regalvorrichtung, die eine Mehrzahl Aufnahmeplätze zur Aufnahme von Vorratselementen aufweist. Auf diese Weise ist es möglich, dass die Handlingvorrichtung die einzelnen Vorratselemente auf geringem Raum rüsten und mit Platten bestücken kann.

Insbesondere kann hierbei vorgesehen sein, dass jeder Aufnahmeplatz eine Positioniereinrichtung und jedes Vorratselement eine dazu passende Positionierhilfe aufweist. Dabei wirken die Positioniereinrichtung und die Positionierhilfe so zusammen, dass jedes Vorratselement in einer definierten Lage am Aufnahmeplatz angeordnet ist. Auf diese Weise wird sichergestellt, dass dann das Rüsten und Bestücken der Vorratselemente durch die Handlingvorrichtung fehlerfrei und positionsgenau erfolgen kann.

Bei der Benutzung der Vorratselemente kann es vorkommen, dass diese angehoben werden müssen. Dies kann natürlich durch die Handlingvorrichtung geschehen, beispielsweise aber auch durch Manipulation mit einem Stapler. Folglich ist nach einer weiteren Ausführungsform vorgesehen, dass wenigstens ein Vorratselement einen Sockel - insbesondere mit wenigstens einer Aufnahme umfasst - wobei der Sockel zum Angreifen eines Hubstaplers ausgelegt ist.

Die oben beschriebene Handlinganordnung kann auch dadurch verbessert werden, dass man ein Identifizierungssystem schafft. Ein solches Identifizierungssystem lässt sich auf unterschiedliche Weise einsetzen. So können beispielsweise der Beladezustand und Rüstzustand der Vorratselemente erfasst und ausgewertet werden. Auch kann beispielsweise über Nachverfolgungseinrichtungen wie RFID-Chips, Barcodes, QR-Codes oder dergleichen, die insbesondere an den Vorratselementen angebracht sind und über ein Scan- bzw. Erfassungssystem des Identifizierungssystems erfasst werden können, bestimmt werden, an welcher Stelle sich ein bestimmtes Vorratselement gerade befindet. Dies umfasst insbesondere auch Informationen darüber, an welcher Stelle im Regal einer Handlinganordnung ein entsprechendes Vorratselement angeordnet ist, wie es bestückt ist und welche Ablagen und/oder Unterteilungseinrichtungen gerade in dem betreffenden Vorratselement vorhanden sind. Nach einer Ausführungsform ist deshalb vorgesehen, dass die Handlinganordnung eine Identifizierungseinrichtung umfasst, welche dazu ausgelegt ist, unterschiedliche Vorratselemente hinsichtlich ihrer Bestückung mit Werkstücken und/oder ihres Rüstzustands, insbesondere des Vorhandenseins oder der Position von Ablagen und/oder Unterteilungseinrichtungen, zu identifizieren.

Die Erfindung wird nachfolgend anhand der Figuren 1 bis 6 näher erläutert.
Figur 1 zeigt ein Vorratselement in perspektivischer Ansicht in einer ersten Rüstkonfiguration.
Figur 2 zeigt ein Vorratselement in perspektivischer Ansicht in einer zweiten Rüstkonfiguration.
Figur 3 zeigt ein Vorratselement in perspektivischer Ansicht in einer dritten Rüstkonfiguration.
Figur 4 zeigt ein Vorratselement in perspektivischer Ansicht in einer vierten Rüstkonfiguration.
Figur 5 zeigt in seitlicher Ansicht eine Regalvorrichtung, in welche eine Mehrzahl Vorratselemente aufgenommen ist.
Figur 6 zeigt eine Handlinganordnung in seitlicher Ansicht.

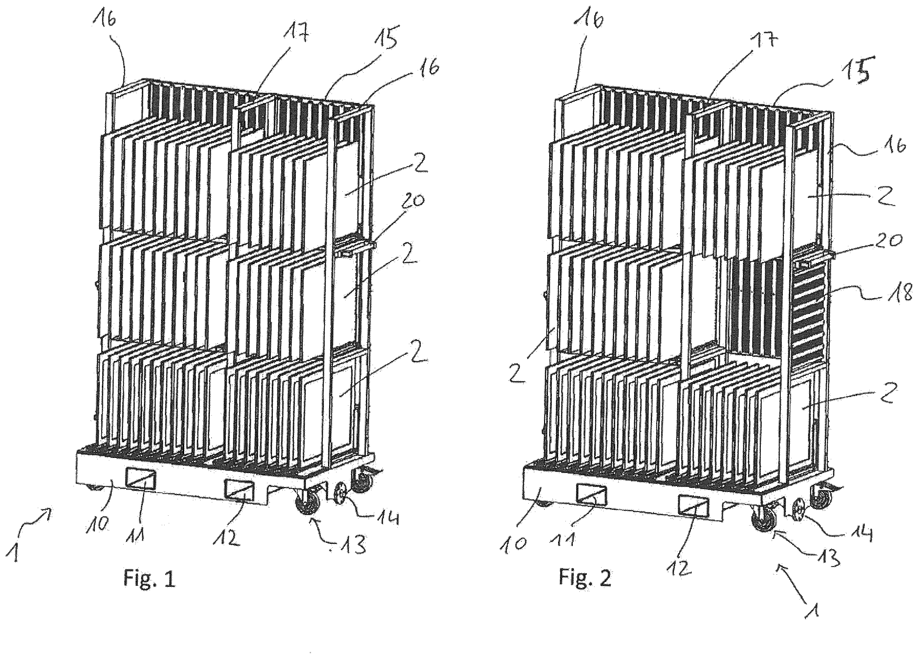

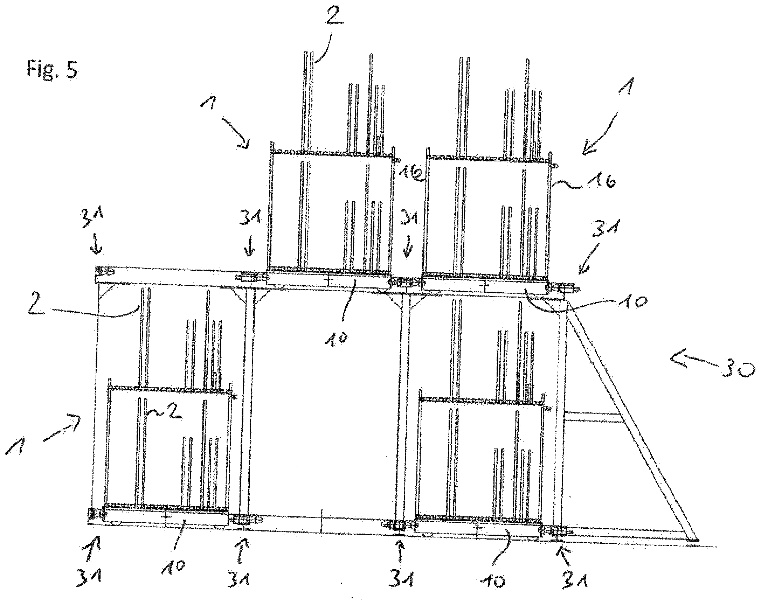

Das in den Figuren 1 bis 4 gezeigte Vorratselement 1 ist bevorzugt als Hordenwagen mit Laufrollen 13 ausgebildet, die an einem Sockel 10 angebracht sind, wobei die folgende Beschreibung nicht zwingend voraussetzt, dass das mobile Vorratselement 1 als Wagen ausgebildet sein muss. Folglich offenbart die weitere Beschreibung ausdrücklich auch ein Vorratselement 1 ohne Rollen. Der Sockel 10 kann zusätzlich oder ergänzend zu den Rollen 13 Aussparungen 11, 12 aufweisen, die etwa zum Einbringen der Gabel eines Hubstaplers geeignet sind. Auf diese Weise lässt sich das Vorratselement 1 anheben und beispielsweise auf einem Regal abstellen (vergleiche Figur 5).

Weiter weist das Vorratselement 1 Ablageböden auf, auf denen plattenförmige Werkstücke 2 abgestellt werden können. Zudem gibt es am Vorratselement 1 vertikale Unterteilungen, die als Seitenwände 16 oder Zwischenwände 17 ausgebildet sein können. Ferner ist eine Rückwand 15 vorgesehen. Die Ablagen, Unterteilungen und/oder die Rückwand können zur Schonung der darauf abgelegten Werkstücke mit Bürsten (zum Beispiel angedeutet durch die schwarzen Streifen in den Figuren 1 bis 4) beschichtet sein.

In Figur 1 weist das Vorratselement 1 vertikale Unterteilungen 16, 17, eine Rückwand und eine Reihe von hier nicht dargestellten Ablagen auf, auf denen die Werkstücke angebracht sind. Auch der Sockel 10 bildet im gezeigten Beispiel eine Ablage für Werkstücke 2. Erfindungsgemäß ist es nun möglich, über eine Handlingvorrichtung (zum Beispiel einen Handlingroboter) das Vorratselement 13 in Abhängigkeit eines vorgesehenen Teileplans zu rüsten. Rüsten bedeutet hier, dass abhängig von der zu erwartenden Teilegröße Unterteilungen 16, 17 sowie Ablagen 18, 19 individuell durch die Handlingvorrichtung positioniert werden. Das Positionieren kann entweder im konkreten Anordnen der genannten Bauteile am Vorratselement 1 bestehen, kann aber auch darin bestehen, dass entsprechende Bauteile weggeschwenkt, entfernt oder versetzt werden. Im Beispiel der Figur 2 ist beispielsweise ein Ablageboden 18 aus seiner horizontalen Anordnung entfernt worden und an einer Verstaueinrichtung 20 eingehängt. Auf diese Weise bleibt das nicht verwendete Teil 18 am Vorratselement 1 vorhanden und steht für einen weiteren Rüstvorgang zur Verfügung.

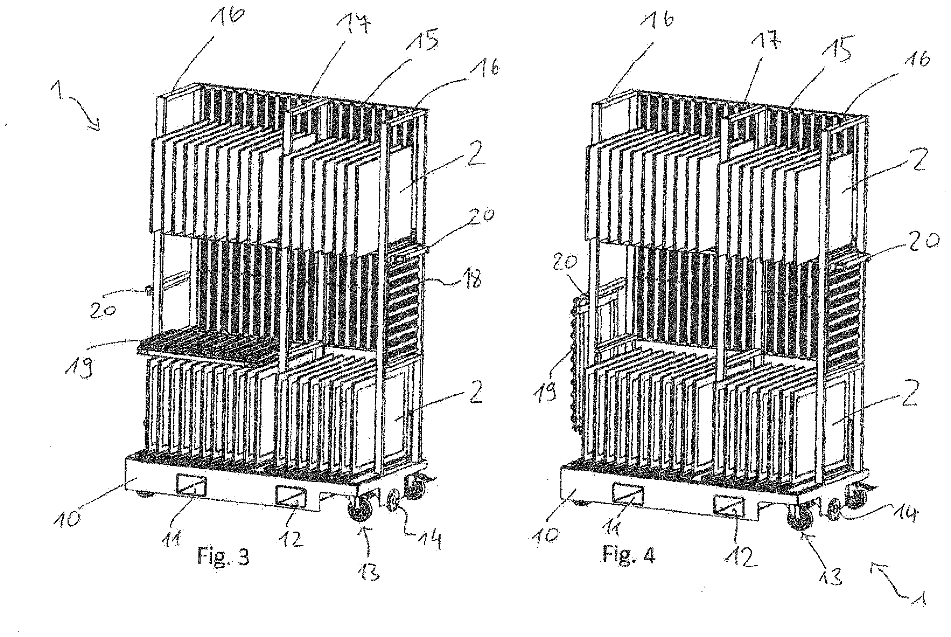

In Figur 3 ist gegenüber Figur 2 ein weiteres Ablagefach leergeräumt, sodass hier der Ablageboden 19 zu erkennen ist. Dieser Ablageboden 19 lässt sich im Wege des Rüstvorganges beispielsweise ebenfalls entfernen, und an einer weiteren Verstaueinrichtung 20 einhängen oder dorthin verschwenken. Diese Situation ist in Figur 4 dargestellt.

Das Vorratselement 1 kann bevorzugt auch eine Positionierhilfe 14 umfassen, die wie im gezeigten Beispiel der Figuren 1 bis 4 als Vertiefung oder Aussparung oder Aufnahme ausgebildet ist. Eine solche Aufnahme kann insbesondere innen konisch zulaufend ausgebildet sein, sodass sie zusätzlich eine Zentrierfunktion aufweist. Ebenso kann das Gegenstück, eine am Aufstellungsort des Vorratselements 1 vorgesehene Positioniereinrichtung 31 (vergleiche Figur 5), entsprechend konisch geformt sein, etwa als Bolzen ausgebildet sein, sodass es in die Positionierhilfe 14 aufgenommen werden kann. Diese Positionierhilfe 14 dient einer definierten Ausrichtung des Vorratselements 1, sodass es beispielsweise durch eine Handlingvorrichtung erkannt und ordnungsgemäß beschickt oder gerüstet werden kann.

In Figur 5 ist ein Teil einer Handlinganordnung gezeigt. Es handelt sich dabei um ein Regal 30, welches im gezeigten Beispiel zwei Etagen aufweist, allerdings auch mehr oder weniger Etagen aufweisen kann. Das Regal 30 kann eine Mehrzahl Vorratselemente 1 aufnehmen. An jedem Ablageplatz des Regals 30 sind dann einseitig oder beidseitig des Vorratselements 1 Positioniereinrichtungen 31 vorgesehen, die nach Ablage des Vorratselements 1 auf einem Ablageplatz in Eingriff mit den am Vorratselement 1 vorgesehenen Positionierhilfen 14 gebracht werden können. Im gezeigten Beispiel weisen die Positionierhilfen 14 Aussparungen auf, die Positioniereinrichtungen 31 sind beispielsweise in Richtung des Vorratselements 1 konisch zulaufende Bolzen, die in der Zeichnung der Figur 5 zur Arretierung und Positionierung des Vorratselements 1 im Regal 30 in horizontaler Richtung verschoben werden können. Natürlich sind auch andere Arten von Positioniereinrichtungen (z. B. Haken, Schrägflächen usw.) denkbar. Wichtig ist, dass beim Zusammenwirken der Positioniereinrichtungen 31 mit den entsprechenden Positionierhilfen 14 eine definierte Positionierung des Vorratselements 1 erzielt wird, sodass eine nicht gezeigte Maschinensteuerung, die eine Handlingvorrichtung steuert, über Informationen über die genauen Positionen der einzelnen Vorratselemente 1 und der darin abgelegten Teile 2 verfügt.

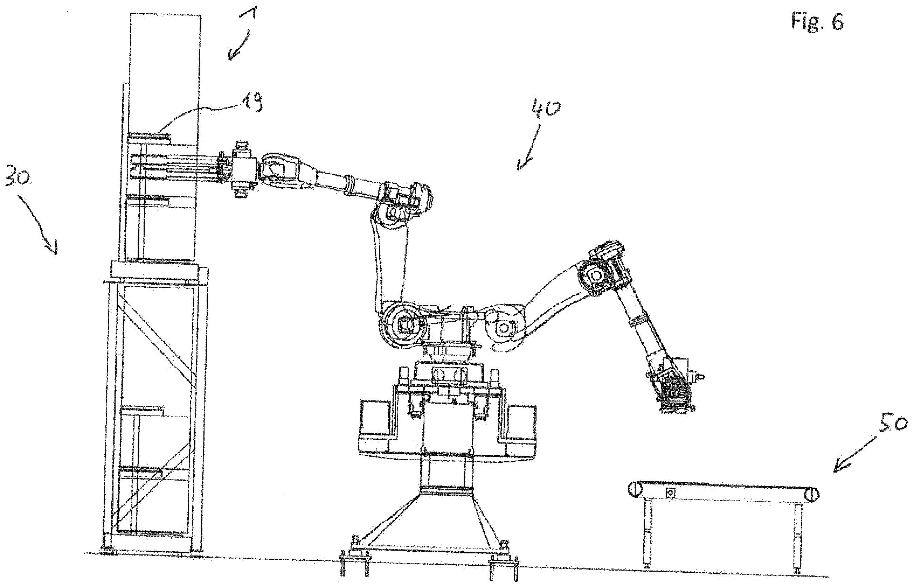

In Figur 6 ist schließlich in Seitenansicht eine Ausführungsform einer Handlinganordnung gezeigt. Diese umfasst im vorliegenden Fall das Regal 30, einen Handlingroboter 40 sowie eine weitere Ablagefläche 50 auf der dem Regal gegenüberliegenden Seite des Handlingroboters 40. Der Handlingroboter 40 kann Vorratselemente 1 wie oben beschrieben rüsten und sodann plattenförmige Werkstücke (in dieser Abbildung nicht gezeigt) von der Ablage 50 nehmen und in ein entsprechendes Vorratselement 1 entsprechend einem vorgegebenen Teileplan einsortieren oder aber entsprechende Teile aus dem Vorratselement 1 entnehmen und auf der Ablage 50 ablegen.

In den Ausführungsbeispielen wird eine Handlinganordnung bereitgestellt, die in der Lage ist, Werkstücke wesentlich effektiver in - insbesondere als Hordenwagen ausgebildeten - mobilen Vorratselementen 1 unterzubringen. Dies wird dadurch erreicht, dass abhängig von einem vorgegebenen Teileplan zunächst durch die Handlingvorrichtung, insbesondere den Handlingroboter, eine Rüstung der entsprechenden mobilen Vorratselemente 1 erfolgt, indem Ablagen oder Unterteilungselemente entsprechend positioniert, entfernt, hinzugefügt, verschwenkt usw. werden. Auf diese Weise entstehen Vorratselemente 1, die im Arbeitsprozess eine optimierte Unterbringung von Werkstücken ermöglichen. Auf diese Weise können nicht nur Leerräume minimiert werden, sondern es können auch zusammengehörende Teilekommissionen auf ein Minimum von Vorratselementen verteilt werden.

## Patentansprüche

1. Verfahren zum Manipulieren von Ablagen oder Unterteilungen von mobilen Vorratselementen (1) mittels einer Handlingvorrichtung, wobei jedes mobile Vorratselement (1) wenigstens eine Ablage (18, 19) und/oder Unterteilungseinrichtung (16, 17) zur Aufnahme und/ oder Ablage von plattenförmigen Erzeugnissen (2) umfasst,
**dadurch gekennzeichnet, dass**
die Handlingvorrichtung die wenigstens eine Ablage (18, 19) und/oder Unterteilungseinrichtung (16, 17) eines der Vorratselemente (1) derart manipuliert, dass plattenförmige Erzeugnisse (2) nach einem durch vorgegebenen Teileplan in dem betreffenden Vorratselement (1) Platz finden.

2. Verfahren nach Anspruch 1,
**dadurch gekennzeichnet,**
**dass** das mobile Vorratselement (1) gerüstet wird, indem wenigstens eine Ablage (18, 19) und/oder wenigstens eine Unterteilungseinrichtung (16, 17) manipuliert wird, indem die manipulierbare Ablage (18, 19) und/oder Unterteilungseinrichtung (16, 17) durch die Handlingvorrichtung entfernt und/oder versetzt und/oder verschwenkt und/oder verschoben wird/werden.

3. Verfahren nach einem der vorigen Ansprüche,
**dadurch gekennzeichnet,**
**dass** die Manipulation von wenigstens einem der Vorratselemente (1) vor der Produktion der nach einem Teileplan vorgegebenen Teile erfolgt.

## Revendications

1. Procédé de manipulation de plateaux ou de subdivisions d'éléments de stockage mobiles (1) au moyen d'un dispositif de manutention, dans lequel chaque élément de stockage mobile (1) comporte au moins un plateau (18, 19) et/ou un dispositif de subdivision (16, 17) pour recevoir et/ou pour déposer des produits en forme de plaques (2),
**caractérisé en ce que**
le dispositif de manutention manipule l'au moins un plateau (18, 19) et/ou le dispositif de subdivision (16, 17) d'un des éléments de stockage (1) de manière à ce que des produits en forme de plaque (2) trouvent leur place dans l'élément de stockage (1) respectif selon un plan de pièces prédéfini.

2. Procédé selon la revendication 1,
**caractérisé en ce**
**que** l'élément de stockage mobile (1) est préparé en manipulant au moins un plateau (18, 19) et/ou au moins un dispositif de subdivision (16, 17) en enlevant et/ou décalant et/ou pivotant et/ou déplaçant le plateau (18, 19) manipulable et/ou le dispositif de subdivision (16, 17) par le dispositif de manutention.

3. Procédé selon l'une quelconque des revendications précédentes,
**caractérisé en ce**
**que** la manipulation de l'au moins un des éléments de stockage (1) est effectué avant la production des pièces prédéfinies selon un plan de pièces.

## Claims

1. Method for manipulating shelves or subdivisions of mobile storage elements (1) by means of a handling device wherein each mobile storage element (1) comprises at least one shelf (18, 19) and/or subdivision unit (16, 17) for receiving and/or storing plate-shaped products (2)
**characterised in that**
the handling device manipulates the at least one shelf (18, 19) and/or subdivision unit (16, 17) of one of the storage elements (1) in such a way that plate-shaped products (2) are placed in the relevant storage element (1) according to a predetermined parts schedule.

2. Method according to claim 1
**characterised in that**
the mobile storage element (1) is set up by manipulating at least one shelf (18, 19) and/or at least one subdivision unit (16, 17) whereby the manipulatable shelf (18, 19) and/or subdivision unit (16, 17) is removed and/or shifted and/or pivoted and/or displaced by the handling device.

3. Method according to one of the preceding claims
**characterised in that**
the manipulation of at least one of the storage elements (1) is carried out prior to production of the parts which are predetermined according to a parts schedule.
